# EUROPEAN PATENT APPLICATION

(11) **EP 2 141 881 A1**
(43) Date of publication of application: **06.01.2010**
(21) Application number: 08290650.4
(22) Date of filing: 02.07.2008
(51) Int. Cl.: H04L 29/06

(54) **Data repository device and associated method for data management**

(71) Applicant: Alcatel Lucent, 75008 Paris (FR)
(72) Inventor: Verbandt, Hugo, 2170 Merksem (BE); Denies, Sabine, 2520 Ranst (BE)
(74) Representative: BiiP cvba

(57) **Abstract**

The present invention relates to a data repository device (102) for use in an IP Multimedia Subsystem network. The device comprises storage means for storing individual user data, reception means for receiving user management instructions for the individual user data and processing means for performing the user management instructions on the individual user data. The storage means are adapted for storing group data, the reception means are adapted for receiving group management instructions (110,112) for the group data and the processing means are adapted for performing the group management instructions (110,112) on the group data.
When a new service has to be associated with all the users, the user related information of several users has to be adopted in a similar way. With the present method, this may be performed by sending a single message only which is then applied to all subscribers that are members of the respective group.

## Description

### Field of the Invention

The present invention generally relates to management of data in an IP Multimedia Subsystem (IMS) network and more in particular to the management of user data in a data repository such as a Home Subscriber Server (HSS) in an IMS network.

### Background of the Invention

An IP Multimedia Subsystem (IMS) typically consists of a number of nodes with various functions. A first set of nodes are related to routing of communication through the network. Examples of such nodes are the various Call Session Control Functions (CSCF) which can act as a proxy towards the network, perform authentication and authorization checks and ensure that messages of a particular user arrive at the appropriate nodes in the network or vice versa. A second type of nodes are Application Servers (AS) which provide certain services to the users of the IMS network. Such services can range from presence and location to more specific services such as Push to Talk over Cellular networks services. A third type of nodes are nodes related to user management and storage of user related information such as account information, authorization information, the services with which a particular user is associated, network options enabled or disabled for a particular user, etc. A typical example of the third type of nodes is the Home Subscriber Server which acts as a large database for user profiles and other user related information in an IMS network.

Nodes in the IMS network such as an AS or CSCF can communicate with the HSS and retrieve information concerning a specific user from the HSS or can supply information to the HSS which is stored in the HSS or which is used to update stored information concerning that specific user. The TISPAN/3GPP specifications of a HSS provide the possibility of storing application specific information for users in the HSS, in addition to the user related information which is used for authentication, authorization, billing, etc. The nodes such as AS can use an Sh-compliant interface which is defined in 3GPP TS 29.328 & TS 29.329 to interact with the HSS and to store, retrieve or update application specific information for a particular user.

The user related information, either for a specific application or general information such as the user profile, associated services, etc is stored on a per-user basis. Thus, each user has a number of data fields which indicate user profile information such as a name, telephone number, etc., information related to the services that the user can access, information related to billing, etc. The HSS can distinguish between various users based on a unique identification of each such as a Session Initiation Protocol (SIP) or a Tel URI. The Sh-interface is defined in such a way that each form of managing user related information in the HSS occurs based on that specific user identification. In other words, each Sh-compliant communication to the HSS which relates to updating, adding, removing or retrieving user related information from the HSS contains at least the user identification. This results in a situation where each management instruction to the HSS is made for a single user.

The current HSS design and in particular the design of the Sh-interface has a significant drawback for scenario's where the user related information of several users has to be adapted in a similar way. For instance, when a new service should be associated with all the users, the current system requires a management instruction for each user. This is a problem of scaling as the burden on the network to update a hundred users is much smaller than the burden of updating several thousands of users at the same time.

The HSS has to make the same changes several times simultaneously or consecutively. The processing capacity of the HSS is therefore reduced while the updates take place. In addition, storing a large number of settings which are the same for all or large numbers of users may lead to a waste of storage space as the same information is kept for each user. In addition to the problem of additional storage and the reduction of available processing capacity, the available bandwidth to the HSS may be reduced significantly. One or more nodes may be transmitting similar instructions to the HSS for a longer period of time when a large number of users is involved. While these instructions are sent, the communication interfaces of the HSS are loaded with receiving and processing these instructions and possibly with transmitting responses to the instructions.

The above described problem does not only pertain to transmission of updates for user information stored on the HSS. It also relates to the addition of new information for large numbers of users. For instance, if a new service is added for all the users currently known on the HSS, it requires a management instruction for each user to add the information related to that particular service.

In summary, the existing HSS solutions and the Sh-interface as defined by 3GPP/Tispan cannot handle management of user related information for a large number of users.

It is an objective of the present invention to provide a device which is able to handle management of user related information in a more efficient manner. It is another objective of the present invention to reduce the load on data storage devices and on communication networks while managing user related information.

### Summary of the Invention

The objectives of the present invention are realized and the drawbacks of the prior art are overcome by a data repository device for use in an IP Multimedia Subsystem network, the device comprising:
- storage means for storing individual user data;
- reception means for receiving user management instructions for the individual user data; and
- processing means for performing the user management instructions on the individual user data,
**characterized in that** the storage means are adapted for storing group data, the reception means are adapted for receiving group management instructions for the group data and the processing means are adapted for performing the group management instructions on the group data.

Indeed, by introducing the concept of group data into the data repository device, it is possible to combine a number of users in a single group and define information on a group-level rather than on an individual user level.

By defining certain information a group level and associating users with certain groups, it is possible to add, change or remove information for a number of users via a single management instruction. For instance, all users of a certain service provider may be part of the same group which defines the default services for all users of the service provider. If the service provider desires to add a new service for all users, a single management instruction can be used to add that service for the group. Each user part of that group may then inherit that new setting and this gain access to the new service. Similarly, changing information in a group can reflect to all users part of that group.

The storage means can be any type of data storage such as data storage in a database, storage of data in a file system, storage of data across one or more physical storage media, encrypted data storage, etc. In addition, the storage means can provide a combination of the afore mentioned such as an encrypted database. It is important for the storage means to be able to store data for a longer period of time, be able to access stored data and to alter stored data.

The data repository is further coupled to other nodes in the IMS network via the reception means. These means may be a single or multiple physical and/or logical network couplings or interfaces whereover the repository device can communicate with other nodes in the network. Typical operations of the reception means may include transmission and reception of data, error checking, verification of source and/or destination of the communications, etc. The reception means may further be coupled to the processing means in order to provide any received instruction to the processing means or to receive instructions from the processing means such as a confirmation message to be sent to a node in the IMS network. The reception means are however not limited to communication within the IMS network. However, in view of the desired level of security, it may be beneficial to only communicate with nodes internal to the IMS network.

The processing means can be a general purpose processing unit or a plurality thereof whereon one or more software algorithms are executed. Such algorithms may be designed to process certain management instructions. There can be a separate algorithm for each type of management instruction. In other words, the receipt of an instruction to add information may be processed by a first algorithm which analyses the instruction, determines which information is to be added to which user or group and then adds the information for that user or group in the storage means. A second algorithm may be executed to retrieve information from the storage means. The second algorithm may for instance determine the requested information and the user or group from which the information should be retrieved. The algorithm can then access the storage means to obtain the information and instruct the reception means to transmit a response with the requested data.

The data repository can have dedicated reception means for individual user management instructions and for group management instructions or all the available reception means can be used for each type of management instructions. There may be a distinct type of management instructions for individual users and groups, or the difference can be made based on the addressing of users and groups. In addition, the protocols used to access the data repository may be updated with a group-field which can be used to denote that information relates to a group rather than to a specific user.

Optionally the data repository device according to the present invention is a Home Subscriber Server.

Further optionally the reception means of the data repository according to the present invention are Sh-interface compliant.

The HSS is a typical data repository in an IMS network which is used to host user related information and a HSS typically has an Sh-compliant interface for interaction with the AS. By incorporating the group-awareness in a HSS, the IMS network becomes group-aware and thus the advantages of the present invention can be embedded in existing IMS networks.

However, adding group-awareness to existing IMS networks may require a modification of the Sh-interface specification to include group identification information in the requests and responses which are defined in the specification. As an alternative, the existing fields for user identification can be reused by configuring a HSS to recognize a certain type of user identification as a group identification. For instance, any user identification which starts with "group_" may be processed as if it is a group identification. This way only the processing on the HSS has to be updated and the data storage structure in the HSS but not the Sh-interface specification.

Optionally the user management instructions and/or the group management instructions for the data repository device according to the present invention comprise one or more of the following:
- instructions to retrieve individual user data and/or group data from the data repository device;
- instructions to add individual user data and/or group data to the data repository device;
- instructions to update individual user data and/or group data in the data repository device; and
- instructions to remove individual user data and/or group data in the data repository device.

Further optionally, the reception means of the data repository device according to the present invention may be adapted for receiving the user management instructions and the group management instructions in a single management instruction.

In view of the present invention, a management instruction is considered as a communication from a node, either in the IMS network or external thereto, which contains instructions for managing data in the data repository device. Such instructions can be requests to retrieve data from storage and provide it to the requesting node, add new data to the repository, change data in the repository or remove data from the repository. In addition, management instructions can be messages used to obtain operational data about the data repository, pending or completed management instructions, etc.

Retrieving data, either for a particular user or a group of users means that a node in the IMS network or outside of the IMS network transmits a request for that particular information to the HSS. The HSS accesses the storage means and obtains the requested data from the storage means. The HSS can then transmit the requested data to the requesting node.

Add data means inserting new data into the data repository such as a new user with all information related to that user, a new group with information related to that group, new settings or information for existing users and/or groups, etc. Similarly updating individual user information and/or group data is changing existing data for that individual user or group. Finally removing individual user data and/or group data can be requested via a remove instruction. This results in removing the individual user data and/or group data designated in the request from the data repository. Data may be removed for a particular user or group by identifying that user or group and which data for that user or group has to be removed. Alternatively a removal request with only an identification of a user or group may result in the complete removal of that user or group. In certain scenario's, removal of particular group data may affect the stored data of other groups and/or users. The repository device may automatically update the affected data, for instance with a default value or via inheritance from another object.

Changes for users and groups may be combined in a single management instruction or may use distinct management instructions. There may for instance be a standard management instruction which has a field indicating that it concerns an individual user or a group. The identification of the user or group may also be used to distinguish between user management and group management. Alternatively there may be a distinct set of user management instructions and group management instructions. Having a single type of management instructions which can be used for both individual users and groups reduces the complexity of the processing means and/or software algorithms executed thereon to process the management instructions.

The present invention further also relates to a network node for use in an IP Multimedia Subsystem network, the network node comprising transmission means for transmitting user management instructions for individual user data to a data repository device,
**characterized in that** the transmission means are adapted for transmitting group management instructions for group data.

In order for existing IMS nodes such as application servers to be able to interact with a data repository according to the present invention, it may be required to introduce group-awareness into the nodes. Introducing group awareness means that the node is able to request group information and transmit management updates for groups rather than users.

The advantage of such nodes is that they no longer need to store all group-related information on the nodes themselves and thus such information can be stored in a central data repository such as a HSS. As a result, application servers and other nodes no longer need to have large internal storage means to store all user information related to the services they offer in order to have group awareness and to avoid excessive communication between the node and the data repository.

The present invention further also relates to a method for managing data repository device in an IP Multimedia Subsystem network, the method comprising the steps of:
- transporting management instructions for individual user data,
**characterized in that** the method further comprises the step of transporting group management instructions for group data.

This method enables the transporting of management instructions for individual user data, transporting group management instructions for group data and a combination thereof. For instance the current Sh-interface specification only allows transporting management instructions for individual user data. By adding the ability of transporting group management instructions, the Sh-interface can be used to interact with a data repository with group-awareness.

### Brief Description of the Drawings

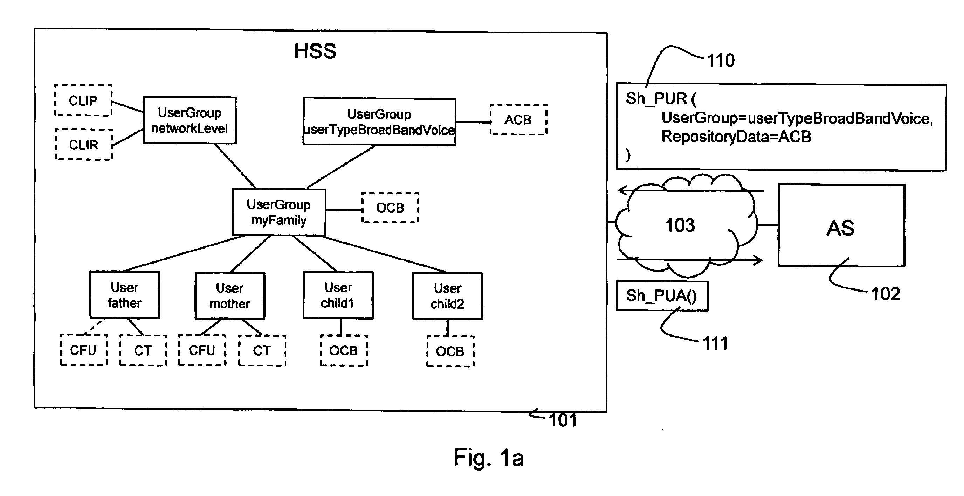

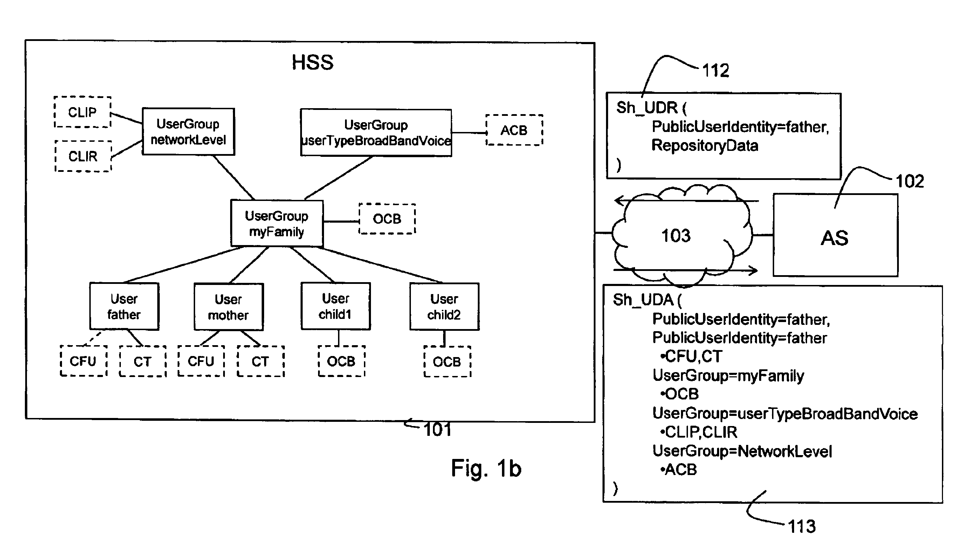

Fig. 1a and 1b illustrate a communication between an AS and a HSS according to an embodiment of the present invention;

### Detailed Description of Embodiment(s)

Fig. 1a and Fig. 1b show a Home Subscriber Server (HSS) 101 and an Application Server (AS) 102 which are interconnected via network 103. The network 103 may consists of one or more communication links and intermediary nodes such as switches, routers, gateways, etc. which are not shown for simplicity of the drawings. The exact composition of network 103 is irrelevant for the understanding of the present invention and the main purpose of network 103 in this particular example is to transport messages between the HSS 101 and the AS 102.

Fig. 1a and Fig. 1b show an example of an internal data structure on the HSS 101. Each box inside the HSS 101 represents either a User or a UserGroup. A dashed box indicates group data for a UserGroup or the individual user data for a User. For instance, there is a User father with a certain setting for CFU and CT. The UserGroup networkLevel has settings for the Calling Line Identification Presentation (CLIP) and Calling Line Identification Restriction (CLIR) options.

Each User can be part of no or one or more UserGroups and a UserGroup may also be part of one or more UserGroups. In the examples illustrated in Fig. 1a and 1b the Users father, mother, child1 and child2 are all part of or have a subscription to the myFamily UserGroup. The myFamily UserGroup in turn is part of the UserGroups userTypeBroadBandVoice and networkLevel. The myFamily group defines settings or options which are related to a particular family. The networkLevel group defines the settings which are similar for all users of the network at a network level. In other words, settings of the networkLevel group will typically be the same for all users. Similarly the userTypeBroadBandVoice group defines settings related to the broadband voice service which is used by a user or group.

Fig. 1 a and 1 b show an OCB option for both the myFamily group and the user child2. In certain embodiments, the HSS 101 may give preference to either of these settings and automatically override the other. In one scenario, the myFamily setting may have a higher priority than an individual user and thus the OCB setting of the myFamily group may be used instead of the OCB setting for the individual user. The HSS 101 may have predetermined settings related to which setting has precedence over which or the precedence may be defined for certain groups or individual users. In alternative embodiments, a node such as AS 102 which obtains the myFamily and child2 settings from the HSS 101 may decide which setting is to be used or which setting has precedence, the group setting or the user setting.

The communication between HSS 101 and AS 102 via network 103 occurs in a way which is compliant to the Sh-interface specification of 3GPP/Tispan. However, the Sh-interface has been adapted according to the present invention to support group management instructions 110 to 113 in addition to the user management instructions. Fig. 1 a shows an example of a group management instruction 110 whereby the AS 102 transmits an Sh_PUR() message 110 to HSS 101. Sh indicates that it is an Sh compliant message and PUR indicates Profile Update Request. In this particular example, a profile of a group is updated thus this message corresponds to a group management request. The contents of this request further 110 indicates the group to which the request relates by the UserGroup = userTypeBroadBandVoice field and the data to be updated which is indicated by the RepositoryData = ACB field in the message. Upon receipt of the Sh_PUR() message 110, the HSS 101 may transmit an Sh_PUA() message 111 which is a Profile Update Acknowledgement message. The Sh_PUA() message 111 may be transmitted when the request 110 is received or when the request 110 is processed. The acknowledgement 111 may be a simple message indicating that the update was received and/or processed or may contain additional information such as a result code of the processing, the newly stored information, etc. In addition, the acknowledgement 111 may also indicate other affected profiles or conflicts with other profiles such as group profiles with higher precedence than the update profile.

In addition to the illustrated fields in the request 110, 112 or acknowledgement 111, 113, additional fields may be incorporated into the transmitted requests 110, 112 and/or acknowledgements 111, 113. For instance a single request may be used to update a plurality of individual user data and/or group data. The fields may also be defined in a different way than illustrated. For instance in addition to indicating that RepositoryData is modified and an identification of which data, the request may also contain a new value for the data.

Fig. 1b shows a second scenario wherein an HSS 101 and AS 102 according to the present invention are used. Fig. 1b illustrates the transmission of a management instruction 112 to retrieve data from the data repository. The AS 102 sends a Sh_UDR() request 112 to the HSS 101. An Sh_UDR() request 112 represents an Sh-interface compliant User Data Request. The request 112 itself includes an identification of the requested user data indicated by the PublicUserldentity = father (either an explicit username or user identification or an URI representing the father) field and the type of information being requested, in this example RepositoryData. The type of requested information could relate to all available data related to the requested user or group including any setting and data in groups whereto the requested user or group belongs. This particular example illustrates a response 113 from the HSS 101 in an Sh_UDA() response 113 which is an Sh-interface compliant User Data Answer message. The response 113 first mentions the identity of the requested user or group and then lists the various settings for the user itself and the settings for each group from which the user inherits settings.

The PublicUserldentity may be used to only transport identifications of users and a different field such as PublicGroupldentity may be used to transport identifications of groups. Alternatively the PublicUserldentity field may be used to transport either a group or user identification and the HSS 101 and AS 102 may be able to determine whether the identification relates to a user or a group. This may be determined based on the name of the user or group or a separate flag set in the UDA or UDR messages which indicates whether it concerns a group, a user or a combination thereof. It may also be possible to request multiple sets of data simultaneously in a single request. For instance the UDR may have several PublicUerldentity fields or a single field may contain several values such as PublicUserldentity=father;child2. Similarly a separate response may be used for each requested user or group or one general response may be used for all the requested users and/or groups.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A data repository device (101) for use in an IP Multimedia Subsystem network, said device comprising:
- storage means for storing individual user data;
- reception means for receiving user management instructions for said individual user data; and
- processing means for performing said user management instructions on said individual user data,
**characterized in that** said storage means are adapted for storing group data, said reception means are adapted for receiving group management instructions (110, 112) for said group data and said processing means are adapted for performing said group management instructions (110, 112) on said group data.

2. The data repository device (101) as defined in claim 1,
**characterized in that** said device (101) is a Home Subscriber Server.

3. The data repository device (101) as defined in claim 1,
**characterized in that** said reception means are Sh-interface compliant.

4. The data repository device (101) as defined in claim 1,
**characterized in that** said user management instructions and/or said group management instructions (110, 112) comprise one or more of the following:
- instructions to retrieve (112) individual user data and/or group data from said data repository device (101);
- instructions to add individual user data and/or group data to said data repository device (101);
- instructions to update (110) individual user data and/or group data in said data repository device (101); and
- instructions to remove individual user data and/or group data in said data repository device.

5. The data repository device (101) as defined in claim 1, **characterized in that** said reception means are adapted for receiving said user management instructions and said group management instructions (110, 112) in a single management instruction.

6. A network node (102) for use in an IP Multimedia Subsystem network, said network node (102) comprising transmission means for transmitting user management instructions for individual user data to a data repository device,
**characterized in that** said transmission means are adapted for transmitting group management instructions (110, 112) for group data.

7. A method for managing data repository device in an IP Multimedia Subsystem network, said method comprising the steps of:
- transporting management instructions for individual user data,
**characterized in that** said method further comprises the step of transporting group management instructions (110, 112) for group data.
